(19) **Europäisches Patentamt / European Patent Office / Office européen des brevets**

(11) **EP 4 711 750 A1**

(12) **EUROPEAN PATENT APPLICATION**
published in accordance with Art. 153(4) EPC

(43) Date of publication:
 **18.03.2026  Bulletin 2026/12**

(21) Application number: **24823684.6**

(22) Date of filing: **12.06.2024**

(51) International Patent Classification (IPC):
 **G01N 23/20058** (2018.01)   **G01N 23/203** (2006.01)
 **G01N 23/2251** (2018.01)

(52) Cooperative Patent Classification (CPC):
 **G01N 23/20058; G01N 23/203; G01N 23/2251**

(86) International application number:
 **PCT/KR2024/008011**

(87) International publication number:
 **WO 2024/258166 (19.12.2024 Gazette 2024/51)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **12.06.2023  KR 20230074914**

(71) Applicant: **LG Chem, Ltd.**
 **Seoul 07336 (KR)**

(72) Inventors:
 • **LEE, Sangwon**
  **Daejeon 34122 (KR)**
 • **KIM, Hoeyeon**
  **Daejeon 34122 (KR)**
 • **JEONG, Jong Seok**
  **Daejeon 34122 (KR)**
 • **PARK, Jeseob**
  **Daejeon 34122 (KR)**

(74) Representative: **Plasseraud IP**
 **104 Rue de Richelieu
 CS92104
 75080 Paris Cedex 02 (FR)**

(54) **APPARATUS AND METHOD FOR ANALYZING CRYSTAL STRUCTURE**

(57)   Provided is a crystal structure analysis apparatus and method. The crystal structure analysis apparatus includes: an Electron Backscatter Diffraction (EBSD) data acquisition module for acquiring EBSD data for a solid material; an image generation module for generating a shape of the solid material as a first image including a plurality of pixels; a clustering module for performing clustering on the plurality of pixels by using the EBSD data so that the first image includes a plurality of clusters each representing a first index of a crystal in a first color; an image processing module for processing the first image to generate a second image so that a second index associated with the first index is displayed as an overlapping figure on the plurality of clusters; and a rendering module for rendering the second image to a display region.

【Figure 1】

EP 4 711 750 A1

## Description

**[Technical Field]**

**CROSS-REFERENCE TO RELATED APPLICATION**

This application claims priority to and the benefit of Korean Patent Application No. 10-2023-0074914 filed in the Korean Intellectual Property Office on June 12, 2023, the entire contents of which are incorporated herein by reference.

The disclosure relates to a crystal structure analysis apparatus and method.

**[Background Art]**

Electron Backscatter Diffraction (EBSD) is mounted on a scanning electron microscope and may analyze the orientation of the material by detecting reflected electrons (rear scattering electrons) when accelerated electrons are injected into the sample. In other words, EBSD may analyze the crystal structure in the irradiation region by using the diffraction pattern measured from each crystal. For example, the position of the electron beam may be controlled through a computer system, the pattern generated in the specimen region where the electron beam stays may be recorded through a camera, and crystallographic information in the corresponding specimen region may be calculated by automatically analyzing the recorded pattern.

**[Disclosure]**

**[Technical Problem]**

The present disclosure attempts to provide a crystal structure analysis apparatus and method that is capable of effectively analyzing a crystal structure of a solid material from Electron Backscatter Diffraction (EBSD) data for the solid material.

**[Technical Solution]**

An example embodiment of the present disclosure provides a crystal structure analysis apparatus including: an Electron Backscatter Diffraction (EBSD) data acquisition module for acquiring EBSD data for a solid material; an image generation module for generating a shape of the solid material as a first image including a plurality of pixels; a clustering module for performing clustering on the plurality of pixels by using the EBSD data so that the first image includes a plurality of clusters each representing a first index of a crystal in a first color; an image processing module for processing the first image to generate a second image so that a second index associated with the first index is displayed as an overlapping figure on the plurality of clusters; and a rendering module for rendering the second image to a display region.

In some example embodiments, the first index may be defined as a value of a sine squared function for an acute angle between a first vector and a second vector, the first vector may include a one directional vector of the crystal at a pixel position corresponding to the crystal on the first image, and the second vector may include a vector facing the pixel position in an outward direction from a center of an entire particle.

In some example embodiments, the first color may include at least one of RGB color, HSL color, HSV color, CMYK color, and gray scale color.

In some example embodiments, the display region may include a first display region and a second display region disposed adjacent to one side of the first display region, and the rendering module may render the second image to the first display region, and render a first color bar that matches and displays a value of the first index and the first color to the second display region.

In some example embodiments, the first vector may be determined in a three-dimensional space defined by a first axis, a second axis, and a third axis that are perpendicular to each other, and the second index may be defined as a direction in which the first vector is projected on a plane formed by the first axis and the second axis.

In some example embodiments, the figure may be an arrow-shaped figure, and the second index is displayed to overlap the plurality of clusters in a direction of the arrow head.

In some example embodiments, the image processing module may process the first image to represent a third index associated with the second index in a second color inside the figure.

In some example embodiments, the third index may be defined as an angle formed by the first vector and a plane between the first axis and the second axis.

In some example embodiments, the second color may include at least one of RGB color, HSL color, HSV color, CMYK color, and gray scale color.

In some example embodiments, the display region may include a first display region and a third display region disposed adjacent to one side of the first display region, and the rendering module may render the second image to the first display region, and render a second color bar that matches and displays a value of the third index and the second color to the third display region.

In some example embodiments, the first index may be defined as a degree of alignment (DoA) value calculated at a pixel position corresponding to the crystal on the first image, and the DoA value may be calculated according to a following equation:

$$DoA = \frac{L}{L + S} C^2$$

herein, L is a length of a major axis vector of a crystal corresponding to the pixel position, S is the length of a minor axis vector of a crystal corresponding to the pixel position, and C is a value of a cosine function for the major axis vector and a vector facing the pixel position in an outward direction from the center of the entire particle.

In some example embodiments, the first color may include at least one of RGB color, HSL color, HSV color, CMYK color, and gray scale color.

In some example embodiments, the display region may include a first display region and a third display region disposed adjacent to one side of the first display region, and the rendering module may render the second image to the first display region, and render a first color bar that matches and displays a value of the first index and the first color to the third display region.

In some example embodiments, the second index may be defined as a major axis vector of the crystal corresponding to the pixel position, and the figure may be an arrow-shaped figure, and the second index may be displayed to overlap the plurality of clusters in the direction of an arrow head.

Another example embodiment of the present disclosure provides a crystal structure analysis method including: acquiring Electron Backscatter Diffraction (EBSD) data for a solid material; generating a shape of the solid material as a first image including a plurality of pixels; performing clustering on the plurality of pixels by using the EBSD data so that the first image includes a plurality of clusters each representing a first index of a crystal in a first color; processing the first image to generate a second image so that a second index associated with the first index is displayed as an overlapping figure on the plurality of clusters; and rendering the second image to a display region.

In some example embodiments, the first index may be defined as a value of a sine squared function for an acute angle between a first vector and a second vector, the first vector may include a one directional vector of the crystal at a pixel position corresponding to the crystal on the first image, and the second vector may include a vector facing the pixel position in an outward direction from a center of an entire particle.

In some example embodiments, the first vector may be determined in a three-dimensional space defined by a first axis, a second axis, and a third axis that are perpendicular to each other, and the second index may be defined as a direction in which the first vector is projected on a plane formed by the first axis and the second axis.

In some example embodiments, the generating of the second image may include processing the first image to represent a third index associated with the second index in a second color inside the figure to generate the second image.

In some example embodiments, the first index may be defined as a degree of alignment (DoA) value calculated at a pixel position corresponding to the crystal on the first image, and the DoA value may be calculated according to a following equation:

$$\mathrm{DoA} = \frac{L}{L+S} C^2$$

herein, L is a length of a major axis vector of a crystal corresponding to the pixel position, S is the length of a minor axis vector of a crystal corresponding to the pixel position, and C is a value of a cosine function for the major axis vector and a vector facing the pixel position in an outward direction from the center of the entire particle.

In some example embodiments, the second index may be defined as a major axis vector of the crystal corresponding to the pixel position, and the figure may be an arrow-shaped figure, and the second index may be displayed to overlap the plurality of clusters in the direction of an arrow head.

Still another example embodiment of the present disclosure provides a computer readable medium in a computer including a processor executing a program or instructions stored in a memory or a storage device, the computer readable medium being recorded with the program, the program executing: acquiring Electron Backscatter Diffraction (EBSD) data for a solid material; generating a shape of the solid material as a first image including a plurality of pixels; performing clustering on the plurality of pixels by using the EBSD data so that the first image includes a plurality of clusters each representing a first index of a crystal in a first color; processing the first image to generate a second image so that a second index associated with the first index is displayed as an overlapping figure on the plurality of clusters; and rendering the second image to a display region.

**[Advantageous Effects]**

According to the example embodiments, it is possible to effectively analyze a crystal structure of a solid material from EBSD data for the solid material by providing information by extracting and visualizing information on how the crystal direction is distributed for all particles for the data collected from the EBSD system. Further, if the user changes the desired crystal plane while the crystal direction is visually expressed for each cluster, the result is immediately reflected visually, so it is possible to search for a connection pattern of the crystal direction in a short time in a general computing environment.

**[Description of the Drawings]**

FIG. 1 is a block diagram for illustrating a crystal structure analysis apparatus according to an example embodiment.

FIGS. 2 to 4 are diagrams for illustrating an example of implementation of the crystal structure analysis apparatus according to the example embodiment.

FIGS. 5 and 6 are diagrams for illustrating an example of implementation of the crystal structure analysis apparatus according to the example embodiment.

FIG. 7 is a flowchart illustrating a crystal structure analysis method according to an example embodiment.

FIG. 8 is a diagram for illustrating an example of implementation of the crystal structure analysis apparatus according to the example embodiment.

FIGS. 9 to 13 are diagrams for illustrating an example of implementation of the crystal structure analysis apparatus according to the example embodiment.

FIG. 14 is a diagram illustrating a computing device according to an example embodiment.

**[Mode for Invention]**

Hereinafter, the present invention will be described more fully hereinafter with reference to the accompanying drawings, in which example embodiments of the invention are illustrated. As those skilled in the art would realize, the described example embodiments may be modified in various different ways, all without departing from the spirit or scope of the present invention. Accordingly, the drawings and description are to be regarded as illustrative in nature and not restrictive. Like reference numerals designate like elements throughout the specification.

Throughout the specification and the claims, unless explicitly described to the contrary, the word "comprise", and variations such as "comprises" or "comprising", will be understood to imply the inclusion of stated elements but not the exclusion of any other elements. Terms including an ordinary number, such as first and second, are used for describing various components, but the components are not limited by the terms. The terms are used only to discriminate one component from another component.

Terms such as "part," "unit," "module," and the like in the specification may refer to a unit capable of performing at least one function or operation described herein, which may be implemented in hardware or circuitry, software, or a combination of hardware or circuitry and software.

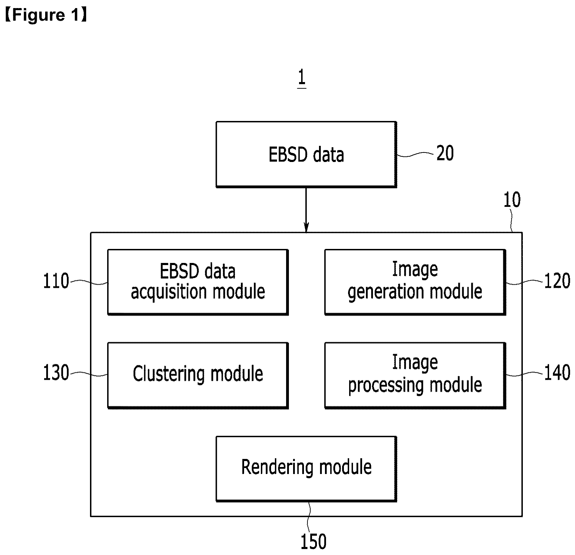

FIG. 1 is a block diagram for illustrating a crystal structure analysis apparatus according to an example embodiment.

Referring to FIG. 1, a crystal structure analysis apparatus 10 according to an example embodiment may analyze a crystal structure of a solid material. The crystal structure analysis apparatus 10 may extract and visualize information on how a crystal direction is distributed with respect to all particles of data collected from an Electron Backscatter Diffraction (EBSD) system. In some example embodiments, the crystal structure analysis apparatus 10 may be a server that serves a web application, which is software executed in a web browser. Accordingly, the crystal structure analysis apparatus 10 may enable users to easily analyze a crystal structure of a solid material by using only a web browser without having to install separate software on their computer. However, the scope of the present invention is not limited thereto, and functions provided by the crystal structure analysis apparatus 10 may be implemented as various types of software.

The crystal structure analysis apparatus 10 may include an EBSD data acquisition module 110, an image generation module 120, a clustering module 130, an image processing module 140, and a rendering module 150.

The EBSD data acquisition module 110 may acquire EBSD data for a solid material. EBSD data may include spatially connected crystallographic direction and phase information, and the EBSD data acquisition module 110 may acquire data of various formats collected from an external EBSD system. For example, EBSD data is two-dimensional data distinguished through a separator, such as a comma, and may be a file created to follow a Common Separated Values (CSV) format. As another example, EBSD data may be in the form of a compressed file consisting of a set of multiple CSV files. As another example, EBSD data may be data that has undergone data cleaning in specific software (e.g., AZtecCrystal) that processes data collected by using EBSD.

The image generation module 120 may generate a shape of a solid material to be analyzed for crystal structure as a first image. Here, the first image may be in the form of a pixel image including a plurality of pixels. For example, the image generation module 120 may generate a first image as a two-dimensional image capable of being displayed on a display device electrically connected to the crystal structure analysis apparatus 10.

The clustering module 130 may perform clustering on a plurality of pixels included in the first image by using the EBSD data acquired by the EBSD data acquisition module 110. In some example embodiments, the clustering module 130 may adopt a density-based clustering algorithm to perform clustering. The clustering module 130 may adopt, for example, DBSCAN (Density-based spatial clustering of applications with noise). Unlike algorithms that perform clustering by using the distance between clusters, density-based clustering algorithms may operate by clustering high-density portions due to finely concentrated data points. In some example embodiments, the clustering module 130 may allow the first image to include a plurality of clusters by using the EBSD data, but each cluster may represent a first index of a crystal in a first color.

For example, the EBSD data may include data on the crystal orientation of crystal grains. The data on the crystal orientation may be a plurality of crystal orientation data collected for each crystal unit having a predetermined size forming a solid material to be analyzed. Here, the crystal unit is not determined to be a specific size, but a unit having a predetermined size may be assumed to correspond to at least one included in the first image in consideration of resolution according to an environment in which the crystal structure analysis apparatus according to the example embodiments may display. The clustering module 130 may perform clustering on a plurality of pixels representing the first image by using a plurality of angle data.

The image processing module 140 may generate a second image indicating a result of clustering by the clustering module 130. That is, the image processing module 140 may process the first image so that the first image generated by the image generation module 120 is displayed in a different color for each cluster, or process the first image so that a second index associated with the determined first index is displayed as an overlapping figure on the plurality of clusters and output the processed first image as a second image. In the example embodiment, the color may include at least one of RGB color, HSL color, HSV color, CMYK color, and gray scale color. RGB color is a color expressed using red, green, and blue, and HSL (or HSB) color may be a color expressed using hue, saturation, and brightness. HSV color is a color expressed using hue, saturation, and value, and CMYK color may be a color expressed using cyan, magenta, yellow, and black.

The rendering module 150 may render the second image generated by the image processing module 140 on a display region provided in the display device. Accordingly, by expressing the image in different colors for each pixel or cluster, or by expressing a certain index of a crystal as a figure overlapping the cluster, it is possible to visualize the crystal characteristics of the entire particle to enable the user to recognize the crystal characteristics at a glance, so that the crystal structure may be effectively analyzed from EBSD data collected in a non-intuitive form.

In some example embodiments, the first index may be defined as a value of a sine square function for an acute angle between a first vector and a second vector. Here, the first vector may include a vector in one direction of the crystal at a pixel position corresponding to the crystal on the first image, and the second vector may include a vector facing the pixel position in an outer direction from the center of the entire particle. Accordingly, the clustering module 130 may perform clustering so that each cluster included in the first image may represent the first index in the first color. In this case, a first color may be calculated for each pixel constituting each cluster, and accordingly, one cluster may be expressed in a gradient color. Here, the one-directional vector of the crystal may be a vector corresponding to one of the lattice vectors of the crystal. In some example embodiments, the lattice vector of the crystal may include an a-axis, a b-axis, and a c-axis, and the one-directional vector of the crystal may include a vector corresponding to the c-axis of the crystal.

In the example embodiment, the first color may include at least one of RGB color, HSL color, HSV color, CMYK color, and gray scale color. RGB color is a color expressed using red, green, and blue, and HSL (or HSB) color may be a color expressed using hue, saturation, and brightness. HSV color is a color expressed using hue, saturation, and value, and CMYK color may be a color expressed using cyan, magenta, yellow, and black.

Meanwhile, the first vector is determined in a three-dimensional space defined by a first axis (e.g., x axis), a second axis (e.g., y axis), and a third axis (e.g., z axis), which are perpendicular to each other, and the second index may be defined as a direction in which the first vector is projected onto a plane formed by the first axis and the second axis. Accordingly, the image processing module 140 may generate the second image by processing the first image so that the second index is displayed as an overlapping figure on each cluster included in the first image. In some example embodiments, the figure may include an arrow-shaped figure, and the second index may be displayed to overlap on multiple clusters in the direction of the arrow head.

In addition, the image processing module 140 may process the first image to represent a third index associated with the second index in a second color inside the figure. Here, the third index may be defined as an angle formed by the first vector with a plane formed by the first axis and the second axis.

In the example embodiment, the second color may include at least one of RGB color, HSL color, HSV color, CMYK color, and gray scale color. RGB color is a color expressed using red, green, and blue, and HSL (or HSB) color may be a color expressed using hue, saturation, and brightness. HSV color is a color expressed using hue, saturation, and value, and CMYK color may be a color expressed using cyan, magenta, yellow, and black.

Accordingly, the crystal structure of solid materials can be effectively analyzed from EBSD data on solid materials by providing information by extracting and visualizing information on how the crystal direction is distributed for all particles for the data collected from the EBSD system. In addition, even when the user changes the desired crystal plane, it is possible to easily search for a pattern of the desired crystal direction based on the corresponding crystal plane. For example, a connection pattern in a specific crystal direction that may be formed between clusters adjacent to each other may be used as a meaningful analysis result, and in order to analyze the connection pattern in the crystal direction from the EBSD data given as two-dimensional data, a lot of computing resources are required and considerable work time is required. In contrast, according to the present example embodiment, if the user changes the desired crystal plane while the crystal direction is visually expressed for each cluster, the result is immediately reflected visually, so it is possible to search for a connection pattern of the crystal direction in a short time in a general computing environment.

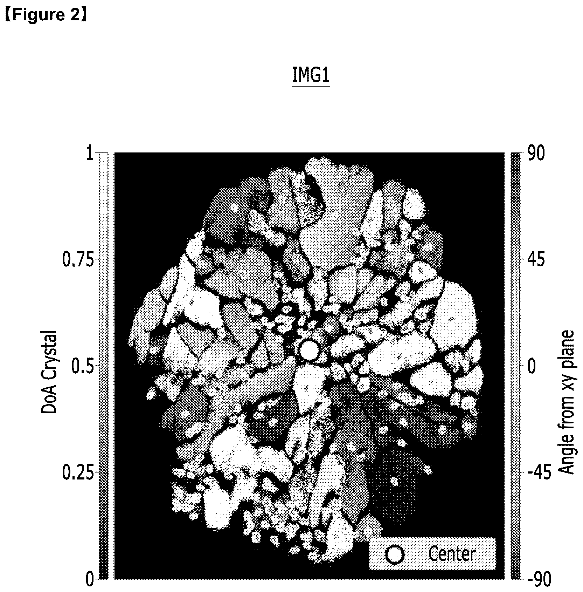

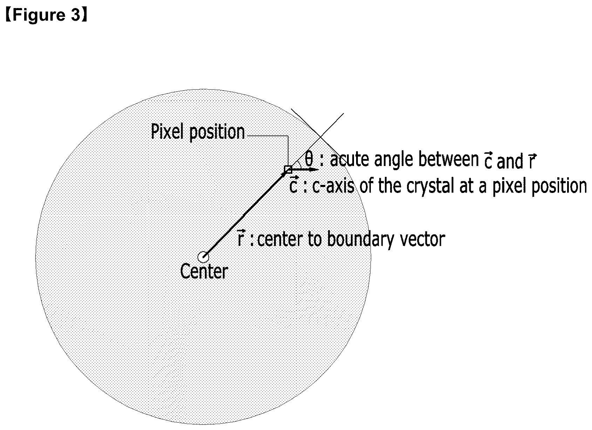

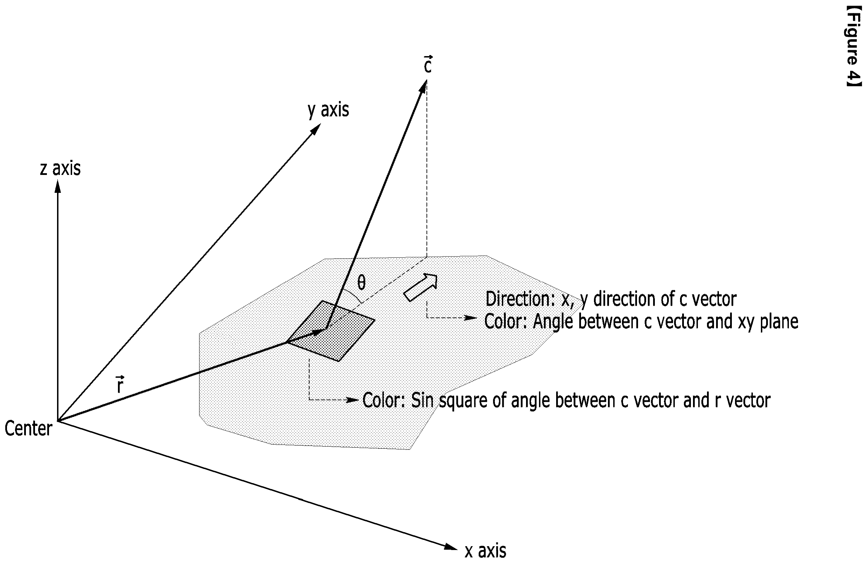

FIGS. 2 to 4 are diagrams for illustrating an example of implementation of the crystal structure analysis apparatus according to the example embodiment. FIG. 2 illustrates a second image IMG1 represented by the rendering module 150, and FIGS. 3 and 4 are diagrams for describing definitions of first to third indexes.

Referring to FIGS. 2 to 4 together, the second image IMG1 represents the entire particles, but the center of the particle may be indicated at the center thereof. Although the center of the particle is expressed as a circle having a black edge in FIG. 2, the scope of the present invention is not limited thereto.

The first index may be defined as a value of a sine squared function for an acute angle between the first vector ($\vec{c}$) and the second vector ($\vec{r}$). The first vector ($\vec{c}$) is a crystal direction at a specific pixel position among crystals expressed in the first image, and may be, for example, a vector corresponding to one direction of the crystal, and the vector corresponding to the c-axis of the crystal. And the second vector ($\vec{r}$) may be a vector facing a corresponding pixel position from the center of the entire particle in an outer direction of the particle. Accordingly, a value (e.g., a real value between 0 and 1) corresponding to the first index may be represented and displayed in the first color for each pixel constituting each cluster.

The second index may be defined as a direction in which the first vector ($\vec{c}$) is projected onto a plane formed by the first axis (e.g., the x axis) and the second axis (e.g., the y axis). Accordingly, a figure (e.g., an arrow) indicating a direction in which the first vector ($\vec{c}$) is projected onto a plane formed by the first axis (e.g., the x axis) and the second axis (e.g., the y axis) may be overlapped and displayed on the cluster.

The third index may be defined as an angle formed by the first vector ($\vec{c}$) with a plane formed by the first axis (e.g., the x axis) and the second axis (e.g., the y axis). Accordingly, the inside of the figure displayed overlapping on each cluster may be represented and displayed in the second color corresponding to the corresponding angle value (e.g., a value expressed by -90 degrees to 90 degrees). Here, as the angle value (or absolute value of the angle value) is closer to 0, one axis of the crystal (e.g., the c axis) may be closer to the shape lying on the screen of the display region where the second image IMG1 is displayed, and as the angle value is closer to 90 degrees or -90 degrees, one axis of the crystal (e.g., the c axis) may be closer to the shape perpendicular to the screen of the display region where the second image IMG1 is displayed.

As described above, by allowing the user to visually recognize the first to third indexes for all particles, it is possible to effectively analyze the crystal structure from EBSD data collected in a non-intuitive form.

Referring back to FIG. 1, in some example embodiments, the first index may be defined as a degree of alignment (DoA) value calculated at a pixel position corresponding to a crystal on the first image. Here, the DoA value may be calculated according to the following Equation.

$$DoA = \frac{L}{L+S}C^2$$

Here, L may be a length of a major axis vector of the crystal corresponding to the pixel position, S may be the length of a minor axis vector of the crystal corresponding to the pixel position, and C may be a value of a cosine function for the major axis vector and a vector facing the pixel position in an outward direction from the center of the entire particle. Accordingly, the clustering module 130 may perform clustering so that each cluster included in the first image may represent the first index in the first color.

In the example embodiment, the first color may include at least one of RGB color, HSL color, HSV color, CMYK color, and gray scale color. RGB color is a color expressed using red, green, and blue, and HSL (or HSB) color may be a color expressed using hue, saturation, and brightness. HSV color is a color expressed using hue, saturation, and value, and CMYK color may be a color expressed using cyan, magenta, yellow, and black.

Meanwhile, the second index may be defined as a major axis vector of a crystal corresponding to a pixel position. Accordingly, the image processing module 140 may generate the second image by processing the first image so that the second index is displayed as an overlapping figure on each cluster included in the first image. In some example embodiments, the figure may include an arrow-shaped figure, and the second index may be displayed to overlap on multiple clusters in the direction of the arrow head. Here, the direction of the arrow head may correspond to the direction in which the major axis vector is directed, and the length of the arrow may be determined as a value that is related to the length of the major axis.

Accordingly, the crystal structure of solid materials can be effectively analyzed from EBSD data on solid materials by providing information by extracting and visualizing information on how the crystal direction is distributed for all particles for the data collected from the EBSD system. In addition, even when the user changes the desired crystal plane, it is possible to easily search for a pattern of the desired crystal direction based on the corresponding crystal plane. For example, a connection pattern in a specific crystal direction that may be formed between clusters adjacent to each other may be used as a meaningful analysis result, and in order to analyze the connection pattern in the crystal direction from the EBSD data given as two-dimensional data, a lot of computing resources are required and considerable work time is required. In contrast, according to the present example embodiment, if the user changes the desired crystal plane while the crystal direction is visually expressed for each cluster, the result is immediately reflected visually, so it is possible to search for a connection pattern of the crystal direction in a short time in a general computing environment.

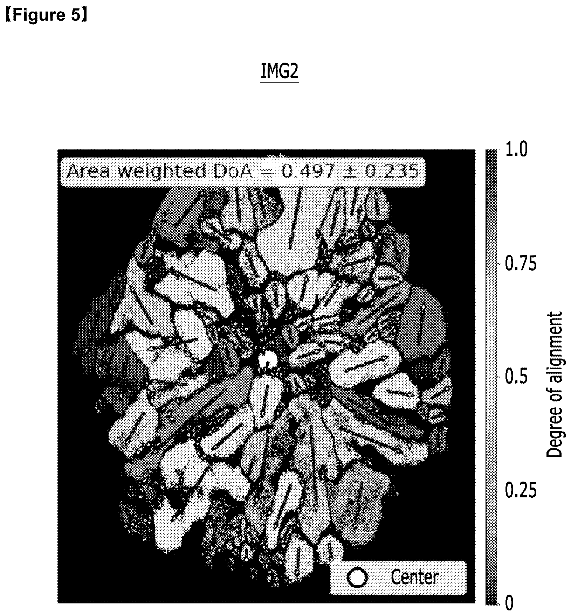

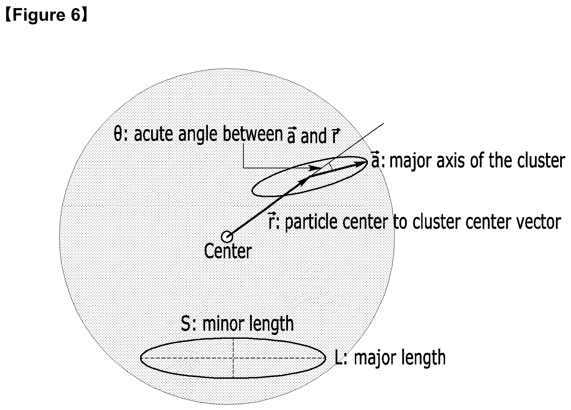

FIGS. 5 and 6 are diagrams for illustrating an example of implementation of the crystal structure analysis apparatus according to the example embodiment. FIG. 5 illustrates the second image IMG2 expressed by the rendering module 150, and FIG. 6 is a diagram for describing definitions of a first index and a second index.

Referring to FIGS. 5 and 6 together, the second image IMG2 represents the entire particles, but the center of the particles may be indicated at the center thereof. Although the center of the particle is expressed as a circle having a black edge in FIG. 5, the scope of the present invention is not limited thereto.

The first index may be defined as a degree of alignment (DoA) value calculated at a pixel position corresponding to a crystal on the first image. Here, the DoA value may be calculated according to the following Equation.

$$\mathrm{DoA} = \frac{\mathrm{L}}{\mathrm{L} + \mathrm{S}} \mathrm{C}^2$$

Here, L may be a length of a major axis vector ($\vec{a}$) of the crystal corresponding to the pixel position, S may be the length of a minor axis vector of the crystal corresponding to the pixel position, and C may be a value of a cosine function for the major axis vector and a vector facing the pixel position in an outward direction from the center of the entire particle. The DoA may be set to have a value of 1 when the long-shaped particles are oriented in an outward direction from the center, that is, when the major axis direction coincides with the direction of the vector ($\vec{r}$), and may be set to have a value of 0 when the long-shaped particles are oriented vertically, that is, when the major axis direction is perpendicular to the direction of the vector ($\vec{r}$).

The second index may be defined as the major axis vector (a) of a crystal corresponding to a pixel position. Accordingly, the direction of the arrow head displayed to overlap on the cluster may correspond to the direction in which the major axis vector ($\vec{a}$) is directed, and the length of the arrow may be determined as a value (e.g., a value proportional to the length of the major axis) that is related to the length of the major axis.

In some example embodiments, a third index may be additionally calculated from the first index. The third index represents a DoA in which the area of the crystal is considered as a weight, and may be referred to as an "Area weighted DoA", and may be calculated according to the following Equation.

$$\mathrm{Area\ weighted\ DoA} = \sum_i (A_i \times \mathrm{DoA}_i)$$

Here, i may be an index of a crystal, and $A_i$ may represent an area of the $i^{\text{th}}$ crystal. The corresponding value may be a value obtained by reflecting an area of an overall figurative alignment of primary particles inside a given secondary particle.

As described above, by allowing the user to visually recognize the first to third indexes for all particles, it is possible to effectively analyze the crystal structure from EBSD data collected in a non-intuitive form.

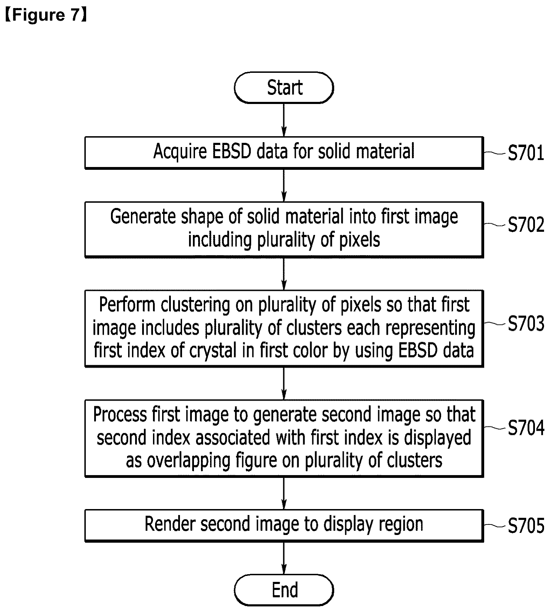

FIG. 7 is a flowchart illustrating a crystal structure analysis method according to an example embodiment.

Referring to FIG. 7, a crystal structure analysis method according to an example embodiment includes acquiring EBSD data for a solid material (S701), generating a shape of the solid material into a first image including a plurality of pixels (S702), performing clustering on the plurality of pixels by using EBSD data so that the first image includes a plurality of clusters each representing a first index of a crystal in a first color (S703), processing the first image to generate a second image so that a second index associated with the first index is displayed as an overlapping figure on the plurality of clusters (S704), and rendering the second image to a display region (S705).

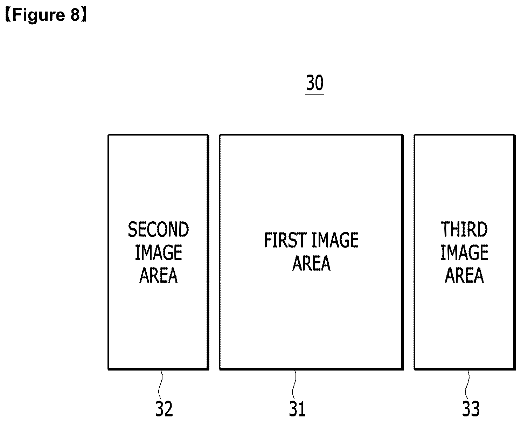

The detailed description of the method may be referred to the foregoing description given in connection with FIGS. 1 to 6 and a description to be given later with reference to FIGS. 8 to 13, and thus a redundant description thereof will be omitted.

FIG. 8 is a diagram for illustrating an example of implementation of the crystal structure analysis apparatus according to the example embodiment.

Referring to FIG. 8 together with FIG. 2, the rendering module 150 may render the second image generated by the image processing module 140 on the display region 30 provided in the display device. Here, the display region 30 may include a first display region 31, a second display region 32, and a third display region 33, and the second display region 32 or the third display region 33 may be disposed adjacent to one side of the first display region 31. The rendering module 150 may render the second image on the first display region 31, and may render a first color bar that matches and displays the value of the first index and the first color, on the second display region. Accordingly, convenience may be provided so that the user may visually compare the entire particles before and after clustering. Further, the rendering module 150 may render the second image on the first display region 31, and may render the second color bar that matches and displays the value of the third index and the second color, on the third display region. In the meantime, referring to FIGS. 8 and 5 together, the rendering module 150 may render the second image on the first display region 31, and may render the first color bar that matches and displays the value of the first index and the first color on the third display region.

Due to this screen arrangement configuration, by allowing the user to visually recognize the various indexes for the crystal for the entire particle, it is possible to effectively analyze the crystal structure from EBSD data collected in a non-intuitive form.

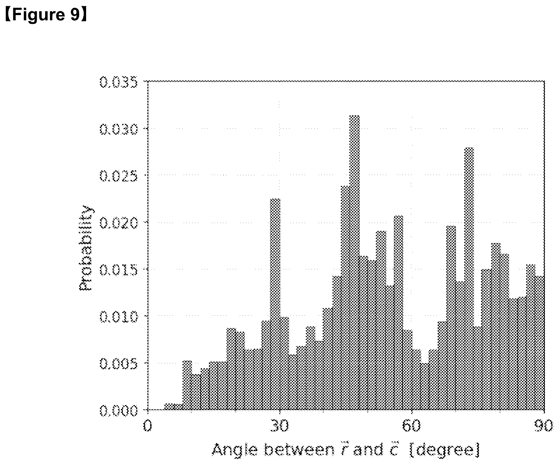

FIGS. 9 to 13 are diagrams for illustrating an example of implementation of the crystal structure analysis apparatus according to the example embodiment.

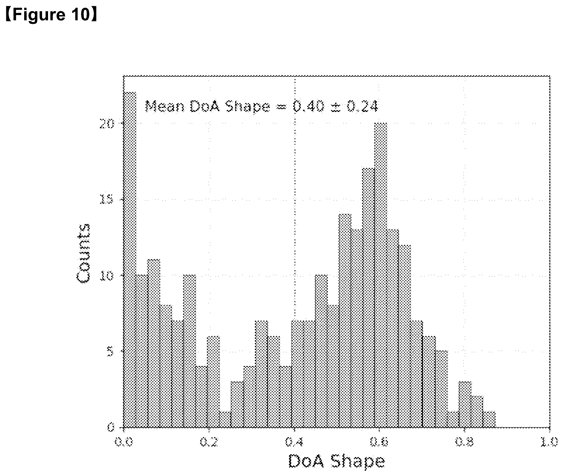

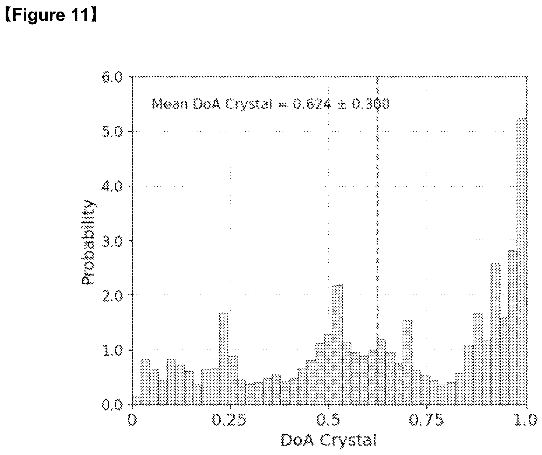

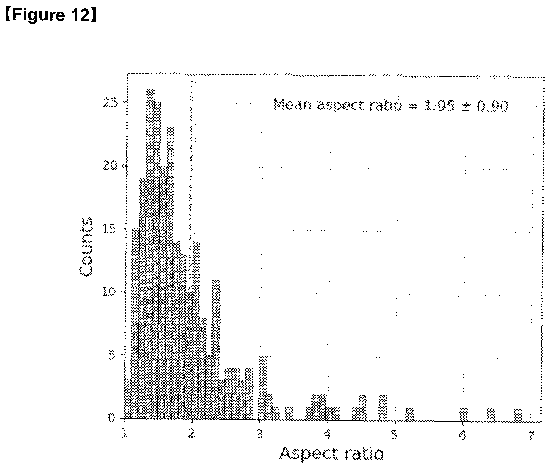

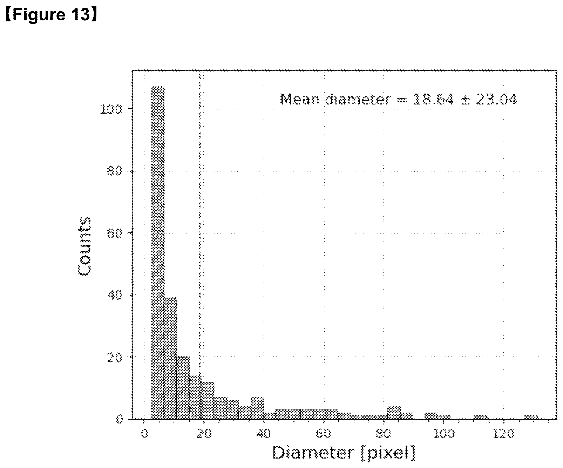

Referring to FIGS. 9 to 13, the crystal structure analysis apparatus according to the example embodiment may output, in addition to the above-described visual screen, the angle histogram exemplarily illustrated in FIG. 9, the DoA histogram exemplarily illustrated in FIG. 10, the DoA crystal histogram exemplarily illustrated in FIG. 11, the aspect ratio histogram exemplarily illustrated in FIG. 12, and the diameter histogram exemplarily illustrated in FIG. 13.

The angle histogram of FIG. 9 shows a plot showing the value of an angle between the first vector $(\vec{c})$ and the second vector $(\vec{r})$, and shows the probability of an angle between the first vector $(\vec{c})$ and the second vector $(\vec{r})$. The DoA histogram of FIG. 10 shows the count value for the DoA value. The DoA crystal histogram of FIG. 11 shows the value of the sine squared function of the angle between the first vector $(\vec{c})$ and the second vector $(\vec{r})$ as a DoA crystal. The aspect ratio histogram of FIG. 12 shows the count value for the aspect ratio. The diameter histogram of FIG. 13 shows a plot in which the diameter of a circle having the same area as the crystal is calculated. Through this analysis, when the angle value between the first vector $(\vec{c})$ and the second vector $(\vec{r})$ is related to a certain property, the analysis may be performed by linking the distribution of the angle value with the corresponding property, or the angle value may be used for parameterization of the product. For example, when the movement of particles in a radial direction and the direction of the crystal are related, the movement of particles and the direction of the crystal may be associated with each other to perform an analysis. In this regard, visualized data or statistical distribution illustrated in FIGS. 9 to 13 may be utilized to provide convenience for quantitative analysis.

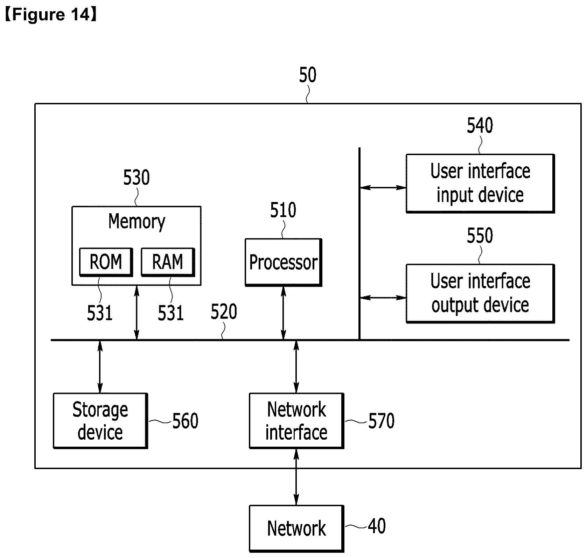

FIG. 14 is a diagram illustrating a computing device according to an example embodiment.

Referring now to FIG. 14, the crystal structure analysis apparatus and method according to the example embodiments may be implemented by using a computing device 50.

The computing device 50 may include at least one of a processor 510, a memory 530, a user interface input device 540, a user interface output device 550, and a storage device 560 communicating via a bus 520. The computing device 50 may also include a network interface 570 electrically connected to the network 40. The network interface 570 may transmit or receive a signal with another entity through the network 40.

The processor 510 may be implemented in various types, such as a Micro Controller Unit (MCU), an Application Processor (AP), a Central Processing Unit (CPU), a Graphic Processing Unit (GPU), a Neural Processing Unit (MPU), and the like, and may be a predetermined semiconductor device executing commands stored in the memory 530 or the storage device 560. The processor 510 may be configured to implement the functions and the methods described above with reference to FIGS. 1 to 13.

The memory 530 and the storage device 560 may include various forms of volatile or non-volatile storage media. For example, the memory may include a read only memory (ROM) 531 and a random access memory (RAM) 532. In the example embodiment, the memory 530 may be located inside or outside the processor 510, and the memory 530 may be connected with the processor 510 through already known various means.

In some example embodiments, at least some configurations or functions of the crystal structure analysis apparatus and method according to the example embodiments may be implemented as programs or software executed on the computing device 50, and the programs or software may be stored on a computer-readable medium.

In some example embodiments, at least some configurations or features of the crystal structure analysis apparatus and method according to the example embodiments may be implemented using hardware or circuit of the computing device 50, or may be implemented as separate hardware or circuit that may be electrically connected to computing device 50.

According to the example embodiments described above, it is possible to effectively analyze a crystal structure of a solid material from EBSD data for the solid material by providing information by extracting and visualizing information on how the crystal direction is distributed for all particles for the data collected from the EBSD system. Further, if the user changes the desired crystal plane while the crystal direction is visually expressed for each cluster, the result is immediately reflected visually, so it is possible to search for a connection pattern of the crystal direction in a short time in a general computing environment.

Although the above example embodiments of the present invention have been described in detail, the scope of the present invention is not limited thereto, but also includes various modifications and improvements by one of ordinary skill in the art utilizing the basic concepts of the present invention as defined in the following claims.

**Claims**

1.  A crystal structure analysis apparatus comprising:

    an Electron Backscatter Diffraction (EBSD) data acquisition module for acquiring EBSD data for a solid material;
    an image generation module for generating a shape of the solid material as a first image including a plurality of pixels;

a clustering module for performing clustering on the plurality of pixels by using the EBSD data so that the first image includes a plurality of clusters each representing a first index of a crystal in a first color;

an image processing module for processing the first image to generate a second image so that a second index associated with the first index is displayed as an overlapping figure on the plurality of clusters; and

a rendering module for rendering the second image to a display region.

2. The crystal structure analysis apparatus of claim 1, wherein:

the first index is defined as a value of a sine squared function for an acute angle between a first vector and a second vector,

the first vector includes a one directional vector of the crystal at a pixel position corresponding to the crystal on the first image, and

the second vector includes a vector facing the pixel position in an outward direction from a center of an entire particle.

3. The crystal structure analysis apparatus of claim 2, wherein:
the first color includes at least one of RGB color, HSL color, HSV color, CMYK color, and gray scale color.

4. The crystal structure analysis apparatus of claim 2, wherein:

the display region includes a first display region and a second display region disposed adjacent to one side of the first display region, and

the rendering module renders the second image to the first display region, and

renders a first color bar that matches and displays a value of the first index and the first color to the second display region.

5. The crystal structure analysis apparatus of claim 2, wherein:

the first vector is determined in a three-dimensional space defined by a first axis, a second axis, and a third axis that are perpendicular to each other, and

the second index is defined as a direction in which the first vector is projected on a plane formed by the first axis and the second axis.

6. The crystal structure analysis apparatus of claim 5, wherein:

the figure is an arrow-shaped figure, and the second index is displayed to overlap the plurality of clusters in a direction of the arrow head.

7. The crystal structure analysis apparatus of claim 5, wherein:
the image processing module processes the first image to represent a third index associated with the second index in a second color inside the figure.

8. The crystal structure analysis apparatus of claim 7, wherein:
the third index is defined as an angle formed by the first vector and a plane between the first axis and the second axis.

9. The crystal structure analysis apparatus of claim 7, wherein:
the second color includes at least one of RGB color, HSL color, HSV color, CMYK color, and gray scale color.

10. The crystal structure analysis apparatus of claim 7, wherein:

the display region includes a first display region and a third display region disposed adjacent to one side of the first display region, and

the rendering module renders the second image to the first display region, and

renders a second color bar that matches and displays a value of the third index and the second color to the third display region.

11. The crystal structure analysis apparatus of claim 1, wherein:

the first index is defined as a degree of alignment (DoA) value calculated at a pixel position corresponding to the crystal on the first image, and

the DoA value is calculated according to a following equation:

$$DoA = \frac{L}{L+S} C^2$$

herein, L is a length of a major axis vector of a crystal corresponding to the pixel position, S is the length of a minor axis vector of a crystal corresponding to the pixel position, and C is a value of a cosine function for the major axis vector and a vector facing the pixel position in an outward direction from the center of an entire particle.

12. The crystal structure analysis apparatus of claim 11, wherein:

the first color includes at least one of RGB color, HSL color, HSV color, CMYK color, and gray scale color.

13. The crystal structure analysis apparatus of claim 11, wherein:

the display region includes a first display region and a third display region disposed adjacent to one side of the first display region, and
the rendering module renders the second image to the first display region, and
renders a first color bar that matches and displays a value of the first index and the first color to the third display region.

14. The crystal structure analysis apparatus of claim 11, wherein:

the second index is defined as a major axis vector of the crystal corresponding to the pixel position, and
the figure is an arrow-shaped figure, and
the second index is displayed to overlap the plurality of clusters in the direction of an arrow head.

15. A crystal structure analysis method comprising:

acquiring Electron Backscatter Diffraction (EBSD) data for a solid material;
generating a shape of the solid material as a first image including a plurality of pixels;
performing clustering on the plurality of pixels by using the EBSD data so that the first image includes a plurality of clusters each representing a first index of a crystal in a first color;
processing the first image to generate a second image so that a second index associated with the first index is displayed as an overlapping figure on the plurality of clusters; and
rendering the second image to a display region.

16. The crystal structure analysis method of claim 15, wherein:

the first index is defined as a value of a sine squared function for an acute angle between a first vector and a second vector,
the first vector includes a one directional vector of the crystal at a pixel position corresponding to the crystal on the first image, and
the second vector includes a vector facing the pixel position in an outward direction from a center of an entire particle.

17. The crystal structure analysis method of claim 16, wherein:

the first vector is determined in a three-dimensional space defined by a first axis, a second axis, and a third axis that are perpendicular to each other, and
the second index is defined as a direction in which the first vector is projected on a plane formed by the first axis and the second axis.

18. The crystal structure analysis method of claim 17, wherein:

the generating of the second image includes processing the first image to represent a third index associated with the second index in a second color inside the figure to generate the second image.

19. The crystal structure analysis method of claim 15, wherein:

the first index is defined as a degree of alignment (DoA) value calculated at a pixel position corresponding to the crystal on the first image, and
the DoA value is calculated according to a following equation:

$$DoA = \frac{L}{L+S}C^2$$

herein, L is a length of a major axis vector of a crystal corresponding to the pixel position, S is the length of a minor axis vector of a crystal corresponding to the pixel position, and C is a value of a cosine function for the major axis vector and a vector facing the pixel position in an outward direction from the center of an entire particle.

20. The crystal structure analysis method of claim 19, wherein:

the second index is defined as a major axis vector of the crystal corresponding to the pixel position, and
the figure is an arrow-shaped figure, and
the second index is displayed to overlap the plurality of clusters in the direction of an arrow head.

21. A computer readable medium in a computer including a processor executing a program or instructions stored in a memory or a storage device, the computer readable medium being recorded with the program, the program executing:

acquiring Electron Backscatter Diffraction (EBSD) data for a solid material;

generating a shape of the solid material as a first image including a plurality of pixels;

performing clustering on the plurality of pixels by using the EBSD data so that the first image includes a plurality of clusters each representing a first index of a crystal in a first color;

processing the first image to generate a second image so that a second index associated with the first index is displayed as an overlapping figure on the plurality of clusters; and

rendering the second image to a display region.

【Figure 1】

1

```
┌─────────────────────────────┐
│          EBSD data          │──── 20
└─────────────────────────────┘
                │
                ▼                              10
┌──────────────────────────────────────────────────┐
│                                                    │
│  ┌───────────────────┐    ┌───────────────────┐   │
│  │    EBSD data      │    │      Image        │   │
│  │ acquisition module│    │ generation module │   │
│  └───────────────────┘    └───────────────────┘   │
│                                                    │
│  ┌───────────────────┐    ┌───────────────────┐   │
│  │ Clustering module │    │      Image         │  │
│  │                   │    │ processing module │   │
│  └───────────────────┘    └───────────────────┘   │
│                                                    │
│         ┌───────────────────┐                      │
│         │  Rendering module │                      │
│         └───────────────────┘                      │
│                                                    │
└──────────────────────────────────────────────────┘
```

110 — EBSD data acquisition module

120 — Image generation module

130 — Clustering module

140 — Image processing module

150 — Rendering module

【Figure 2】

IMG1

【Figure 3】

【Figure 4】

Direction: x, y direction of c vector
Color: Angle between c vector and xy plane

Color: Sin square of angle between c vector and r vector

$\vec{c}$

θ

$\vec{r}$

x axis

y axis

z axis

Center

【Figure 5】

IMG2

【Figure 6】

【Figure 7】

```
                    ┌─────────────┐
                    │    Start    │
                    └─────────────┘
                           │
                           ▼
        ┌────────────────────────────────────────┐
        │    Acquire EBSD data for solid material │───S701
        └────────────────────────────────────────┘
                           │
                           ▼
        ┌────────────────────────────────────────┐
        │ Generate shape of solid material into   │
        │ first image                             │───S702
        │ including plurality of pixels           │
        └────────────────────────────────────────┘
                           │
                           ▼
        ┌────────────────────────────────────────┐
        │ Perform clustering on plurality of      │
        │ pixels so that first                    │
        │ image includes plurality of clusters    │───S703
        │ each representing                       │
        │ first index of crystal in first color   │
        │ by using EBSD data                      │
        └────────────────────────────────────────┘
                           │
                           ▼
        ┌────────────────────────────────────────┐
        │ Process first image to generate second  │
        │ image so that                           │
        │ second index associated with first      │───S704
        │ index is displayed                      │
        │ as overlapping figure on plurality of   │
        │ clusters                                │
        └────────────────────────────────────────┘
                           │
                           ▼
        ┌────────────────────────────────────────┐
        │    Render second image to display region│───S705
        └────────────────────────────────────────┘
                           │
                           ▼
                    ┌─────────────┐
                    │     End     │
                    └─────────────┘
```

【Figure 8】

【Figure 9】

【Figure 10】

【Figure 11】

【Figure 12】

【Figure 13】

【Figure 14】

## INTERNATIONAL SEARCH REPORT

| International application No. |
|---|
| **PCT/KR2024/008011** |

### A. CLASSIFICATION OF SUBJECT MATTER

**G01N 23/20058**(2018.01)i; **G01N 23/203**(2006.01)i; **G01N 23/2251**(2018.01)i

According to International Patent Classification (IPC) or to both national classification and IPC

### B. FIELDS SEARCHED

Minimum documentation searched (classification system followed by classification symbols)

G01N 23/20058(2018.01); G01N 23/203(2006.01); G01N 23/2055(2018.01); G06N 20/00(2019.01); G06N 3/04(2006.01); G06N 3/08(2006.01); H01J 37/22(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전자후방산란회절(electron backscatter diffraction), 이미지(image), 클러스터링 (clustering), 랜더링(rendering), 결정 구조(crystal structure), 오버랩(overlap)

### C. DOCUMENTS CONSIDERED TO BE RELEVANT

| Category* | Citation of document, with indication, where appropriate, of the relevant passages | Relevant to claim No. |
|---|---|---|
| A | EP 3702766 A1 (NIPPON STEEL CORPORATION) 02 September 2020 (2020-09-02) <br> See paragraphs [0028]-[0038] and [0100]-[0106] and figures 1 and 20. | 1-21 |
| A | KR 10-2023-0054246 A (SAMSUNG ELECTRONICS CO., LTD. et al.) 24 April 2023 (2023-04-24) <br> See paragraphs [0020]-[0040] and figures 1 and 2. | 1-21 |
| A | KR 10-2020-0080409 A (POSCO et al.) 07 July 2020 (2020-07-07) <br> See paragraphs [0012]-[0048] and figures 1-6. | 1-21 |
| A | KR 10-1301684 B1 (KOREA INSTITUTE OF MACHINERY & MATERIALS) 30 August 2013 (2013-08-30) <br> See paragraphs [0053]-[0078], claim 1 and figure 4. | 1-21 |
| A | JP 2023-007646 A (NIPPON STEEL CORP.) 19 January 2023 (2023-01-19) <br> See claim 1 and figures 1 and 2. | 1-21 |

☐ Further documents are listed in the continuation of Box C.  ☑ See patent family annex.

| | |
|---|---|
| \* Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 September 2024** | **13 September 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/008011**

| Patent document cited in search report | | | Publication date (day/month/year) | Patent family member(s) | | | Publication date (day/month/year) |
|---|---|---|---|---|---|---|---|
| EP | 3702766 | A1 | 02 September 2020 | CN | 111279183 | A | 12 June 2020 |
| | | | | CN | 111279183 | B | 18 August 2023 |
| | | | | EP | 3702766 | A4 | 25 August 2021 |
| | | | | EP | 3702766 | B1 | 26 July 2023 |
| | | | | JP | 6521205 | B1 | 29 May 2019 |
| | | | | US | 10811217 | B2 | 20 October 2020 |
| | | | | US | 2020-0066480 | A1 | 27 February 2020 |
| | | | | WO | 2019-082976 | A1 | 02 May 2019 |
| KR | 10-2023-0054246 | A | 24 April 2023 | US | 2023-0122101 | A1 | 20 April 2023 |
| KR | 10-2020-0080409 | A | 07 July 2020 | KR | 10-2178444 | B1 | 13 November 2020 |
| KR | 10-1301684 | B1 | 30 August 2013 | KR | 10-2013-0063342 | A | 14 June 2013 |
| JP | 2023-007646 | A | 19 January 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230074914